**Europäisches Patentamt**

**European Patent Office**

**Office européen des brevets**

(19)

(11) Veröffentlichungsnummer: **0 160 225 B1**

(12)

# EUROPÄISCHE PATENTSCHRIFT

(45) Veröffentlichungstag der Patentschrift:
29.06.88

(21) Anmeldenummer: 85103977.6

(22) Anmeldetag: 02.04.85

(51) Int. Cl.⁴: **F 28 D 7/10, F 28 F 13/06, C 01 B 3/32, F 16 L 53/00**

(54) **Verfahren zur Wärmeabfuhr aus einem bzw. zur Wärmezufuhr in ein senkrecht angeordnetes Rohr.**

(30) Priorität: 28.04.84 DE 3415916

(43) Veröffentlichungstag der Anmeldung:
06.11.85 Patentblatt 85/45

(45) Bekanntmachung des Hinweises auf die Patenterteilung:
29.06.88 Patentblatt 88/26

(84) Benannte Vertragsstaaten:
AT BE CH DE FR GB IT LI NL

(56) Entgegenhaltungen:
DE-A-2 509 897
DE-C-3 429 522
FR-A-421 222
US-A-1 782 435
US-A-2 518 583
US-A-2 937 923
US-A-4 326 582

PETRO/CHEM ENGINEER, Band 42, Nr. 9,
September 1970, Seiten 38-42, The Petroleum
Engineer Publishing Co., Dallas, US; L.A. ZEIS:
"Critical materials in steam reformers"

(73) Patentinhaber: BASF Aktiengesellschaft, Carl-Bosch- Strasse 38, D-6700 Ludwigshafen (DE)

(72) Erfinder: Dierke, Ruediger, Am Waldhuegel 10,
D-4450 Lingen Ems (DE)
Erfinder: Schlichthaerle, Gottfried, Dr.,
Hauberallee 19, D-6730 Neustadt (DE)
Erfinder: Schuchart, Peter, Dr., Bensheimer Ring
13b, D-6710 Frankenthal (DE)
Erfinder: Schweitzer, Armin, Dr., Frankenthaler
Strasse 189, D-6700 Ludwigshafen (DE)

**Beschreibung**

Die Erfindung betrifft ein Verfahren zur Wärmeabfuhr aus einem senkrecht angeordneten bzw. zur Wärmezufuhr in ein senkrecht angeordnetes Rohr beliebigen Querschnitts, das von einem Fluid hoher Temperatur durchströmt wird und von einer koaxialen Umhüllung umgeben ist, durch die ein Gasstrom geleitet wird. Ein derartiges Verfahren ist nach der US-A-2 937 923 bekannt.

Bei einer häufig angewandten Ausführungsform werden als Rohre Doppelrohre verwendet, wobei in den Innenrohren der Transport des heißen Reaktionsgases stattfindet, und wobei die Außenrohre als druckaufnehmende Elemente ausgeführt sind. Der Ringraum zwischen beiden Rohren ist mit Wärmedämmstoffen ausgefüllt, um eine starke Erwärmung der Außenrohre und eine Temperaturerniedrigung des Reaktionsgases zu verhindern. Einerseits aufgrund von Werkstoffkennwerten, beispielsweise maximal zulässigen Festigkeitswerten, andererseits aufgrund von eventuellen Beschädigungen von Schweißverbindungen ausgelöst durch unterschiedliche Mechanismen ist es eine absolute Notwendigkeit, die Außenrohre in einem vorgegebenen Temperaturbereich von ca. 400 - 140°C zu halten. Einerseits sind solche Rohre häufig sich ändernden Witterungsbedingungen, wie Temperaturschwankungen, verschiedenen Windgeschwindigkeiten, Sonneneinstrahlung, etc. ausgesetzt, andererseits ändert sich der Wärmetransport pro Zeiteinheit in den Innenrohren wie beispielsweise bei hohem Durchsatz - also bei Vollast - oder bei geringem Durchsatz durch die Innenrohre oder während des Anfahrens oder Abstellens des Steamreformers. Eine Abkühlung unter beispielsweise ca. 140°C des im Ringraum zwischen Außen- und Innenrohr befindlichen Gases hat Taupunktunterschreitung desselben zur Folge, was aufgrund von Korrosion zu Schäden an den Außenrohren führt. Das Einhalten des Temperaturbereichs von ca. 400 - 140°C bei Änderung der oben erwähnten Wittetungsverhältnisse und bei Änderung der Bedingungen in den Innenrohren war in der Vergangenheit nicht immer ausreichend gewährleistet; so kam es beispielsweise zu den beschriebenen Schäden, bevorzugt an Schweißnähten, was Undichtigkeiten der Außenrohre und damit längeren Ausfall des Steamreformers aufgrund aufwendiger Reparaturen zur Folge hatte.

Ähnlich gelagerte Probleme können auch in Rohren, in denen chemische Reaktionen ablaufen, auftreten.

Es stellte sich daher die Aufgabe, mittels einfacher und wirtschaftlicher Maßnahmen zu gewährleisten, daß ein vorgegebener Temperaturbereich an der Außenwand eines Rohres eingehalten wird.

Diese Aufgabe wird erfindungsgemäß dadurch gelöst, daß zur Einhaltung eines vorgegebenen Temperaturbereiches an der Außenwand des Rohres die Menge des Gasstroms durch öffnen oder Schließen von in der Umhüllung angeordneten Öffnungen geändert wird.

Weitere Merkmale des erfindungsgemäßen Verfahrens sind Gegenstand der abhängigen Ansprüche.

Es versteht sich von selbst, daß die in den Patentansprüchen genannten erfinderischen Merkmale auch für ein Einzelrohr beliebigen Querschnitts - ohne Umhüllung durch Wärmedämmstoffe und ein zweites Rohr - Gültigkeit haben, und nicht speziell auf Rohre eines Steamreformers bzw. Reaktors beschränkt sind.

Ein Ausführungsbeispiel der Erfindung mit den wesentlichen erfinderischen Merkmalen ist in der Zeichnung dargestellt und wird im folgenden näher beschrieben.

Es zeigen
Figur 1 einen Schnitt durch ein Einzelrohr
Figur 2 einen Teilschnitt durch ein aus mehreren Einzelrohren bestehenden Rohrsystem eines Steamreformers (stark vereinfacht).

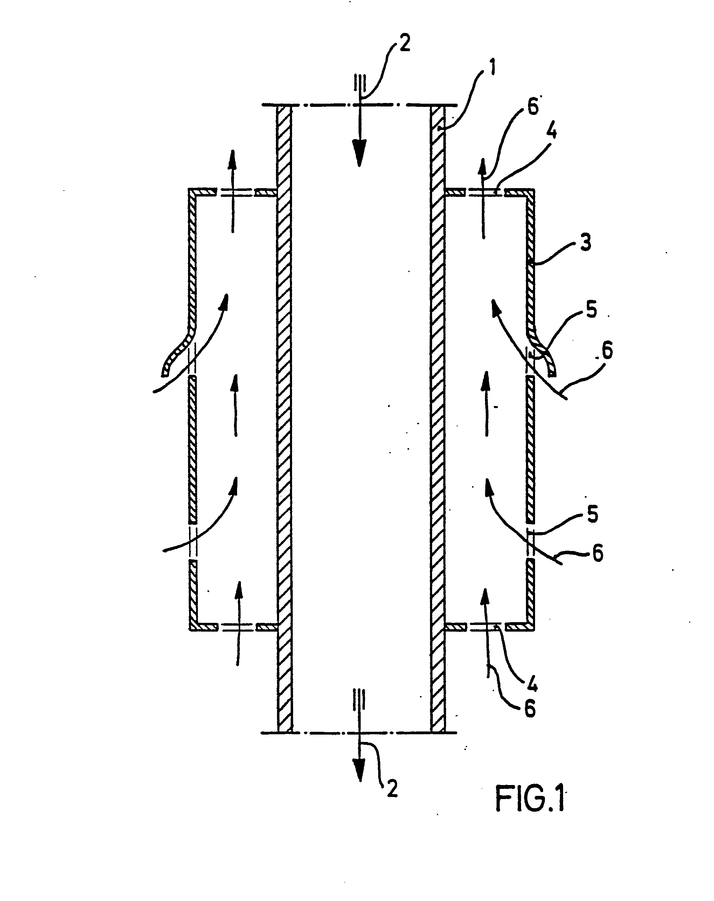

Gemäß Figur 1 ist ein Rohr 1, durch das ein Fluid 2 mit hoher Temperatur und unterschiedlicher Strömungsgeschwindigkeit hindurchströmt, mit einer koaxialen Umhüllung 3 vergehen, die sowohl mit Öffnungen 4 im oberen und unteren Abschluß als auch mit Öffnungen 5 am Umfang der Umhüllung ausgestattet ist. Das durch die Öffnungen ein- bzw. austretende Gas 6 strömt aufgrund von Konvektion oder Zwangsförderung - mittels eines Ventilators - entlang des Außenmantels des Rohres 1 durch den Spalt zwischen Rohr 1 und Umhüllung 3. Durch Öffnen bzw. Schließen der Öffnungen ist es möglich, den Gasmengenstrom 6 in Abhängigkeit der Rohrwandtemperatur so zu verändern, daß dieselbe einen vorgegebenen Temperaturbereich weder über- noch unterschreitet.

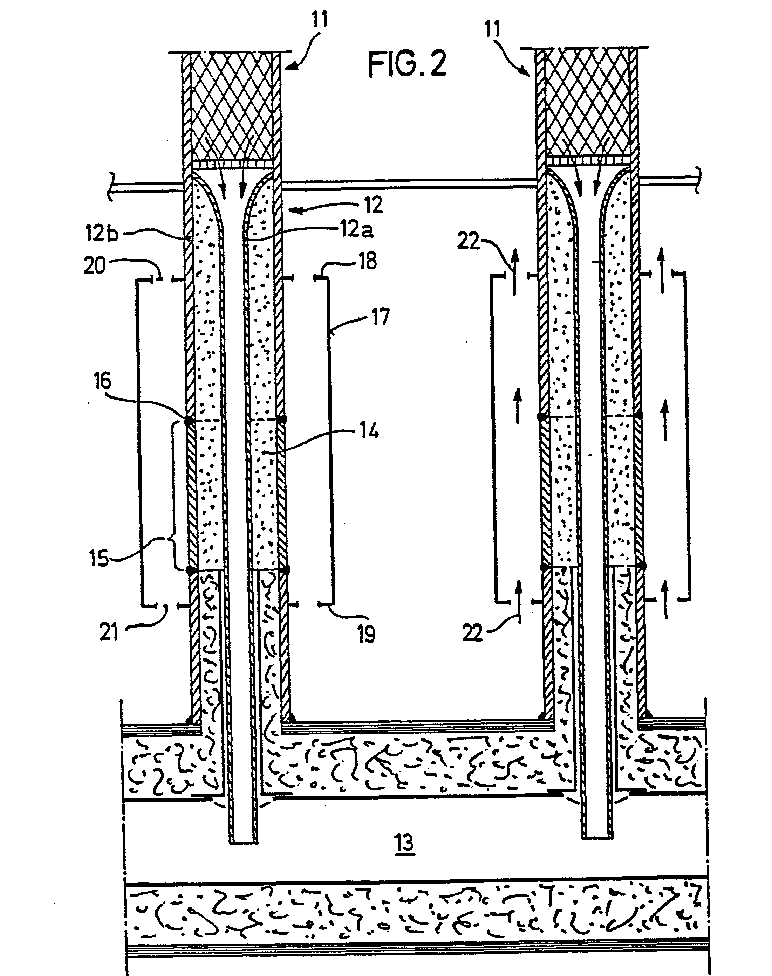

Bei dem in Figur 2 vereinfacht dargestellten Ausschnitt aus einem Steamreformer müden eine Vielzahl von parallel und senkrecht verlaufenden Reaktionsrohren 11 - ausgelegt für Reaktionsabläufe bis ca. 10 bis 60 bar - über Verbindungsrohre 12 in einen Sammler 13. Die Verbindungsrohre 12 - ausgeführt als Doppelrohre bestehen aus den Innenrohren 12a, in denen der Transport der ca. 750 - 900°C heißen Reaktionsgase von den Reaktionsrohren zu dem Sammler erfolgt, und den Außenrohren 12b. Der Ringraum zwischen den Innen- und den Außenrohren ist mit Wärmedämmstoffen 14 ausgefüllt. Aus Fertigungsgründen wird beim Übergang der aus austenitischem Stahl bestehenden Außenrohre 12b zu dem aus ferritischem Stahl gefertigen Sammler 13 ein aus ferritischem Stahl bestehendes Zwischenrohrstück 15 eingeschweißt, wobei bei den daraus resultierenden Mischschweißnähten 16 bei Taupunktunterschreitung (< ca. 140°C) des im Ringraum zwischen Außen- und Innenrohr befindlichen Reaktionsgases, durch Korrosion Schäden auftreten. Um dies zu verhindern, werden die einzelnen Außenrohre 12b jeweils mit einer koaxialen Umhüllung 17 umgeben, die durch einen oberen und unteren Abschluß 18 und 19 mit dem Außenrohr 12b Verbunden ist. In diesen Abschlüssen, jeweils gleichmäßig verteilt, befinden sich Öffnungen 20 und 21, die mittels Vorrichtungen geschlossen oder geöffnet werden können. Erfindungsgemäß wird durch diese Öffnungen hindurch durch den Spalt zwischen Außenrohr und Umhüllung Gas 22, vorzugsweise Luft, zur Wärmeabfuhr aus dem Außenrohr bzw. zur Wärmezufuhr in das Außenrohr hindurchgeleitet. Durch Öffnen und Schließen und damit vermehrten bzw. verminderten Durchfluß an Gas ist der durchströmende Gasmengenstrom als Funktion der Rohrwandtemperatur derart steuerbar, daß die Rohrwandtemperatur der Außenrohre innerhalb des vorgegebenen Temperaturbereichs von ca. 400 - 140° C gehalten wird.

In Abwandlung des oben Dargelegten ist es möglich, horizontal und parallel übereinander angeordnete Rohre, in denen heiße Gase strömen, mit einer einzigen sich über mehrere Rohre erstreckenden Umhüllung zu versehen, wobei gemäß dem erfindungsgemäßen Verfahren zur Wärmeabfuhr bzw. Wärmezufuhr, das zwischen Umhüllung und den Rohren strömende Gas nicht an einem einzigen Rohr, sondern an mehreren innerhalb einer Umhüllung angeordneten Rohren vorbeiströmt.

**Patentansprüche**

1. Verfahren zur Wärmeabfuhr aus einem senkrecht angeordneten bzw. zur Wärmezufuhr in ein senkrecht angeordnetes Rohr beliegigen Querschnitts, das von einem Fluid hoher Temperatur durchströmt wird und von einer koaxialen Umhüllung umgeben ist, durch die ein Gasstrom geleitet wird, dadurch gekennzeichnet, daß zur Einhaltung eines vorgegebenen Temperaturbereiches an der Außenwand des Rohres die Menge des Gasstromes durch Öffnen oder Schließen von in der Umhüllung angeordneten Öffnungen geändert wird.

2. Verfahren nach Anspruch 1, dadurch gekennzeichnet, daß die Öffnungen im unteren und oberen Abschluß der Umhüllung oder am Umfang der Umhüllung angeordnet sind.

3. Verfahren nach Anspruch 1 oder 2, dadurch gekennzeichnet, daß der Gasstrom durch Einbauten zwischen dem Rohr und der Umhüllung spiralförmig geführt wird.

4. Verfahren nach Anspruch 1 oder 2, dadurch gekennzeichnet, daß der Gasstrom durch Unterteilung des Zwischenraumes zwischen Rohr und Umhüllung in mehrere Kammern in unterschiedlichen Mengen geführt ist.

5. Verfahren nach Anspruch 1 oder 2, dadurch gekennzeichnet, daß der Gasstrom vor Einleitung in die Umhüllung gekühlt bzw. erwärmt wird,

6. Verfahren nach einem der vorgehenden Ansprüche zur Verwendung in einem Steamreformer, bei welchem eine größere Anzahl von Rohren mit kreisrundem Querschnitt und koaxialer Umhüllung vorgesehen ist.

**Claims**

1. A method for removing heat from, or supplying heat to, a vertical pipe which is of any cross-section and through which a fluid at high temperatures flows and which is surrounded by a coaxial sheath through which a gas stream is passed, wherein, in order to maintain a predetermined temperature range at the outer wall of the pipe, the amount of the gas stream is altered by opening or closing orifices arranged in the sheath.

2. A method as claimed in claim 1, wherein the orifices are arranged in the lower and upper end of the sheath or at the periphery of the sheath.

3. A method as claimed in claim 1 or 2, wherein the gas stream is fed spirally through baffles between the pipe and the sheath.

4. A method as claimed in claim 1 or 2, wherein the gas stream is fed at different rates by dividing the space between the pipe and the sheath into a plurality of chambers.

5. A method as claimed in claim 1 or 2, wherein the gas stream is cooled or heated before being passed into the sheath.

6. A method as claimed in any of the preceding claims for use in a steam reformer in which a relatively large number of pipes having a circular cross-section and coaxial sheath is provided.

**Revendications**

1. Procédé pour fournir de la chaleur à, ou évacuer de la chaleur d'un tube de section quelconque disposé verticalement, qui est parcouru par un fluide à température élevée et qui est entouré par une enveloppe coaxiale à travers laquelle est envoyé un courant gazeux, caractérisé par le fait que, pour maintenir entre des limites prédéterminées la température sur la paroi extérieure du tube, on fait varier le débit du courant gazeux en ouvrant ou en fermant des orifices ménagés dans l'enveloppe.

2. Procédé selon la revendication 1, caractérisé par le fait que les orifices sont ménagés dans la fermeture inférieure et supérieure de l'enveloppe ou à la périphérie de l'enveloppe.

3. Procédé selon la revendication 1 ou 2, caractérisé par le fait que le courant gazeux suit un trajet en spirale grâce à des pièces intérieures situées entre le tube et l'enveloppe.

4. Procédé selon la revendication 1 ou 2, caractérisé par le fait que le courant gazeux circule à différents débits grâce à la subdivision en plusieurs chambres de l'espace compris entre le tube et l'enveloppe.

5. Procédé selon la revendication 1 ou 2, caractérisé par le fait que le courant gazeux est refroidi ou réchauffé avant son introduction dans l'enveloppe.

6. Procédé selon l'une des revendications précédentes pour application dans un steamreformer (réformeur à vapeur) dans lequel est prévu un grand nombre de tubes à section circulaire et enveloppe coaxiale.

FIG.1

FIG. 2